# EUROPEAN PATENT SPECIFICATION

(11) **EP 2 980 472 B1**
(45) Date of publication and mention of the grant of the patent: **17.01.2018**
(21) Application number: 15178216.6
(22) Date of filing: 24.07.2015
(51) Int. Cl.: F21V 8/00, F21V 7/00, F21V 5/02

(54) **A LIGHTING DEVICE AND CORRESPONDING METHOD**
BELEUCHTUNGSVORRICHTUNG UND ZUGEHÖRIGES VERFAHREN
DISPOSITIF D'ÉCLAIRAGE ET PROCÉDÉ CORRESPONDANT

(30) Priority: 28.07.2014 IT TO20140598
(43) Date of publication of application: 03.02.2016
(73) Proprietor: OSRAM GmbH, 80807 München (DE); OSRAM S.P.A. - SOCIETA' RIUNITE OSRAM EDISON CLERICI, 20126 Milano (IT)
(72) Inventor: BIZZOTTO, Alessandro, I-31033 Castelfranco Veneto (Treviso) (IT); MUSCHAWECK, Julius, D-82131 Gauting (DE)
(74) Representative: Bosotti, Luciano

(56) References cited:
- EP-A1- 1 881 266
- EP-A2- 0 787 942
- EP-A2- 2 392 953
- US-A- 5 640 483
- US-A1- 2010 232 164
- US-A1- 2013 201 717
- US-A1- 2013 235 582
- US-B1- 6 536 921

## Description

### Technical Field

The present description relates to lighting devices.

One or more embodiments may refer, for example, to lighting devices for streetlighting applications.

### Technological Background

In implementing lighting devices, such as e.g. streetlighting devices, various factors are taken into account as regards mechanical, electrical, thermal and optical aspects, possibly concerning aesthetical features, too.

Various standards have been defined on the subject, such as for example the S5 Standard, which envisages both asymmetric and symmetric lighting arrangements.

According to the needs, for example in order to meet the medium and minimum requirements of ground lighting, luminaires may be arranged e.g. in arrays or square linear grids, with specific distances, implementing symmetric and asymmetric distributions.

In order to meet such requirements, rather complex solutions have been proposed, which are based on 3D reflectors and circuit board arrangements (for example Printed Circuit Boards, PCB).

More specifically, the invention relates to a lighting device according to the preamble of claim 1, which is known e.g. from US 2013/201717 A1. Also documents US 5 640 483 A and EP 0 787 942 A2 are of interest for the invention.

### Object and Summary

One or more embodiments aim at improving such known solutions. According to one or more embodiments, said object is achieved thanks to a lighting device having the features set forth in claim 1 that follows. One or more embodiments may also concern a corresponding method, according to claim 10.

The claims are an integral part of the technical teaching provided herein with reference to the embodiments.

### Brief Description of the Figures

One or more embodiments will now be described, by way of non-limiting example only, with reference to the enclosed Figures, wherein:
- Figure 1 is a perspective view of a lighting device according to embodiments,
- Figure 2 is a perspective view of one of the elements of Figure 1, shown separately,
- Figure 3 is a diametral section of the element shown in Figure 2,
- Figure 4 is an enlarged view of the portion of Figure 3 shown by arrow IV, and
- Figure 5 is a section along line V-V of Figure 1.

It will be appreciated that, for better clarity of illustration, the parts visible in the figures are not to be considered necessarily to scale.

### Detailed Description

In the following description, numerous specific details are given to provide a thorough understanding of one or more exemplary embodiments. The embodiments may be practiced without one or several specific details, or with other methods, components, materials, etc. In other instances, well-known structures, materials, or operations are not shown or described in detail to avoid obscuring various aspects of the embodiments. Reference throughout this specification to "an embodiment" means that a particular feature, structure, or characteristic described in connection with the embodiment is included in at least one embodiment. Thus, the possible appearances of the phrases "in one embodiment" or "in an embodiment" in various places throughout this specification are not necessarily all referring to the same embodiment. Furthermore, particular features, structures, or characteristics may be combined in any suitable manner in one or more embodiments.

The headings provided herein are for convenience only, and therefore do not interpret the scope or meaning of the embodiments.

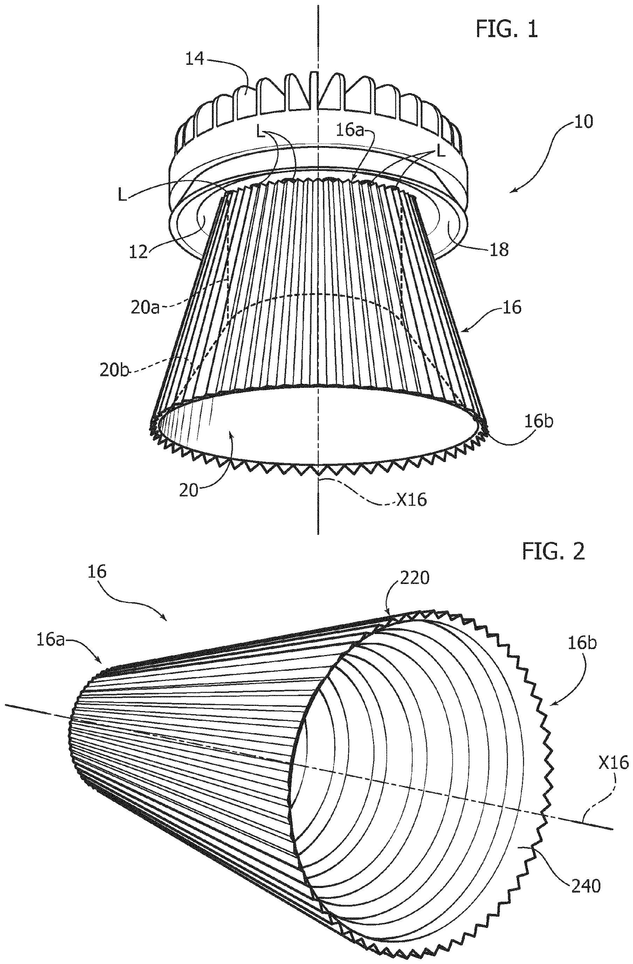

In Figure 1 reference 10 denotes a lighting device adapted to employ, as light radiation sources, electrically powered light radiation sources, which may comprise e.g. solid-state light radiation sources such as for instance LED sources.

In one or more embodiments, these light radiation sources (in the following, for example only, we will constantly refer to LEDs), denoted with L, are arranged according to an annular layout (a circular layout in the examples shown in the Figures).

In one or more embodiments, lighting sources L may be arranged on a substrate 12 adapted to consist for example of a board substantially similar to a Printed Circuit Board (PCB), for example of a circular or annular shape.

In one or more embodiments, substrate 12 may be coupled in a heat exchange relationship (e.g. may be in contact) with a heat sink 14 such as for example a heat sink of an electrically conductive material. Such a heat sink, which may be provided with heat dissipation fins, may be formed of a metal or plastic material, e.g. by extrusion.

Heat sink 14 has the function to dissipate the heat produced during the operation of light radiation sources L. In possible operating conditions, lighting device 10 may be oriented as shown in Figure 1, the heat sink 14 being placed in a higher position than board 12 accommodating the annular array of light radiation sources L.

In one or more embodiments, in a position facing the array of light radiation sources L (i.e. in a position opposite heat sink 14) there may be provided a light radiation guide 16, which may be formed of a material with light radiation propagating features (e.g. a transparent plastic material).

In one or more embodiments, guide 16 (in the following, for simplicity, "light guide") may have a tubular and therefore hollow structure.

In one or more embodiments, light guide 16 may have a flared or diverging (trumpet-like) shape, from a narrow proximal end 16a towards a wider distal end 16b.

The terms "proximal" and "distal" refer to the propagating direction of light radiation, which enters light guide 16 from the proximal end 16a, into which the light radiation is input from sources L, towards distal end 16b, which outputs the light radiation. Similarly, the definition of ends 16a and 16b as respectively the "narrow" and the "wider" end indicates the direction of divergence of the flared shape of light guide 16.

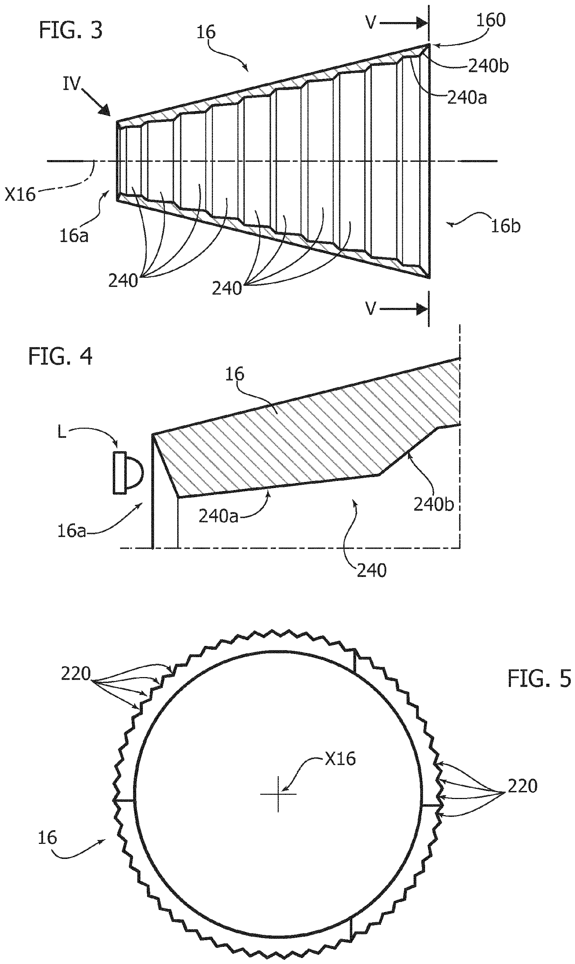

In one or more embodiments, the diametral dimensions of proximal end or input end 16a may be made to correspond to the distribution of light radiation sources L in the array mounted on board 12, by arranging sources L in an annular (e.g. circular) layout extending in a position facing proximal end 16a of guide 16, as can be observed in Figure 4.

In one or more embodiments, as exemplified in the Figures, light guide 16 may have a frusto-conical shape. On the basis of the envisaged applications, different flared or divergent shapes may be adopted, such as a frusto-pyramidal shape (e.g. with a high number of faces), the shape of an exponential horn, etc.

In one or more embodiments, around the array of light radiation sources L, therefore at the proximal end 16a of light guide 16, there can be optionally provided an annular reflector of an arc-shaped (e.g. parabolic or quasi-parabolic) section profile, having the function of reflecting towards distal end 16b of light guide 16 a part of the light radiation output by sources L which may leak towards the outside of light guide 16.

On the other hand, reference 20 denotes a central reflector which may be optionally provided in order to send back to light guide 16 the light radiation which has leaked towards the inside of the cavity of light guide 16 itself during the propagation from proximal end 16a to distal end 16b of guide 16 itself. In one or more embodiments, reflector 20 (if present) may comprise a non-divergent, e.g. cylindrical, proximal portion 20a, and a divergent distal portion 20b.

In one or more embodiments, light guide 16, annular reflector 18 and/or internal reflector 20 may be made for example of a molded plastic material.

In one or more embodiments, annular reflector 18 and internal reflector 20 may be provided with a surface treatment (e.g. aluminization) adapted to provide / improve the reflectivity properties of these elements.

As can be seen in Figure 2, where light guide 16 is shown separately, in one or more embodiments guide 16 itself may have on its external surface a pattern or texture consisting in grooves 220, extending in the direction of main axis X16 of light guide 16. It will be appreciated that such an arrangement may be adopted both in the case of a light guide 16 of frusto-conical shape and in the case of light guides with different shapes (for example a frusto-pyramidal shape or the shape of a flared trumpet).

In one or more embodiments, on the internal surface of light guide 16 there may be provided a sequence of annular ribs 240 extending cross-wise (for example in respective orthogonal planes) of main axis X16 of light guide 16.

As can be appreciated in the views of Figures 3 and 4, in one or more embodiments ribs 240 may have a profile with a triangular section, with:
- a proximal facet 240a extending in a direction approximately aligned with main axis X16 of light guide 16, and
- a distal facet 240b, diverging from said main axis X16.

Optionally, the degree of divergence of distal facets 240b from axis X16 may increase from proximal end 16a to distal end 16b of light guide 16.

In one or more embodiments, proximal facets 240a may be adapted to act as collimating facets for the light radiation propagating along light guide 16; distal facets 240b may act as outcoupling facets with a varying (e.g. increasing) inclination angle, proceeding towards distal end 16b of light guide 16.

The observation of the right part of Figure 3 highlights that distal facet 240b of rib 240 arranged at distal end 16b of light guide 16 is adapted to define an output end of light guide 16 having a sharp profile.

Moreover, the observation of the left part of Figure 4 highlights that, in one or more embodiments, proximal end 16a of light guide 16 (facing light radiation sources L) may have a flared concave shape.

One or more embodiments may therefore achieve a lighting device structure which is on the whole simple, comprising a small number of parts.

In one or more embodiments, light guide 16, having a tubular structure and for example a frusto-conical shape, shows a rotational symmetry around axis X16. Moreover, outer grooves 220 extending along the directrices of the frusto-conical surface and proximal facets 240a of annular grooves 240 may act as a sequence of cascade collimators, while distal facets 240b are adapted to act as output collimators of the Total Internal Reflection (TIR) kind, their inclination angle with respect to axis X16 (and optionally their width) varying along the lengthwise development of light guide 16.

Central reflector 10 (if present) may cooperate with the remaining structure of the device (e.g. with board 12 accommodating light radiation sources L and/or heat sink 14) in order to keep light guide 16 in position. However, one must keep in mind that the presence of such an element is optional and it affects the overall efficiency of lighting device 10 only negligibly, optionally leaving the power supply cables exposed.

Reflector 18, the presence of which is again optional, may be such as not to play a significant role in determining the efficiency of the lighting device, while being adapted to help reduce lateral glare effects and the possible appearance of a dark unlit ring in proximity of the array of light radiation sources L.

One or more embodiments as exemplified herein enable a significant reduction of the output of light radiation backwards (i.e., in the orientation of Figure 1, upwards), so as to reduce light pollution effects without resorting to additional elements).

In one or more embodiments, the arrangement of heat sink 14 (possibly in a high position, as exemplified in Figure 1) may improve the effectiveness of the cooling action.

In order to obtain a desired light distribution, one or more embodiments may take into account the need, e.g., of having a high lighting intensity at certain angles and a low intensity at other angles. For the angles in which a high intensity is required, it is possible to implement the collimation of a fraction of the light radiation.

To achieve such a goal, in various implementations it is possible to resort to light waveguides at the incoupling facet, or to employ lenses arranged on the LEDs, so as to obtain an already-collimated radiation when it is input into the light guide. The latter solution may be adopted, for example, if light radiation must be output only in a small angular range, e.g. in order to obtain a lighting effect in which it is attempted to collimate as much radiation as possible.

One or more embodiments may on the contrary aim at obtaining a lighting effect for a wide angular range, for example in an angular range of +/- 70° from a central axis (e.g. axis X16 of Figure 1).

In one or more embodiments, such a result may be obtained by collecting the light radiation on a wide angle, starting from light radiation sources L, and incoupling it into light guide 16 with a simple conic shape. In one or more embodiments, the internal profile (i.e. the ribs provided on the inner surface of light guide 10) may act with a sequence of collimators which can make use of the output light radiation with high angular values from the LED, by using the facets closest to proximal end 16a and sending collimated light, starting from the facets closest to distal end 16b, in the directions where a high intensity is required. Optionally, it is also possible to vary the divergence angle ("tilt") of distal facets 240b (adapted to be implemented as TIR surfaces).

In one or more embodiments, having the section of light guide 16 increase starting from proximal end 16a towards distal end 16b enables to preserve the "etendue" of light distribution. In one or more embodiments, this result may be obtained by implementing light guide 16 as one molded element. At the same time, by subdividing the collimation function on the sequence of facets 240a of ribs 240 it is possible to keep the cross section approximately constant, making the production easier for example via injection molding. The overall diverging (e.g. frusto-conical) shape of the light guide makes it possible to achieve such results without employing undercuts, which leads to a further simplification of the molding process.

With its sharp profile, terminal edge 160 of distal end 16b allows this end to act as a final outcoupling facet, so as to send out the light radiation remaining in the guide and to increase the overall efficiency.

The lengthwise ribs 220 on the outer part of light guide 16 may enable the achievement of various results.

For example, in one or more embodiments, they enable to break down into several portions what would otherwise appear as a single reflection for each LED or could be observed for each facet of internal ribs 240. In this way it is possible to reduce the glare and to mask the details of the internal part of device 10 to an observer.

Ribs 220, moreover, keep within low values the azimuth angular range of the light emitted by each light radiation source L, by virtually acting as azimuthal Fresnel lenses. In this way it is also possible to achieve an asymmetric distribution by simply setting the arrangement of light radiation sources L in a smaller portion of the annular area where they are accommodated, i.e. while using the same light guide and the same remaining parts, which enables a reduction of complexity and overall costs.

In one or more embodiments, the optical surfaces of light guide 16 may be either substantially planar (external grooves 220) or frusto-conical. This may ease the production, e.g. via mills or lathes, of injection molds. In one or more embodiments, it is moreover possible to avoid excessively sharp transitions to obtain the optical function, which leads to a further reduction in cost.

In order to counter the effects of light radiation leakage starting from the LEDs (i.e. the fact that not all light radiation produced by LEDs L is coupled at proximal end 16a of light guide 16) while at the same time preventing light guide 16 from "embracing" the LEDs somehow (which would not permit the use of simple facet structures) it is optionally possible to resort to reflectors 18 and 20.

The light radiation leaking towards the interior of light guide 16 may impinge on internal reflector 20, which reflects it towards light guide 16 in the desired direction.

The light radiation which leaks towards the exterior may impinge on collar-shaped reflector 18, and be reflected towards the output end of the device (at distal end 16b of guide 16). In order to counter the appearance of a dark annular shadow around the back of device 10 it is possible to move the position of collar-shaped reflector 18 as backwards as possible, so that light radiation is emitted from as back as possible within device 10.

Of course, without prejudice to the basic principles, the details and the embodiments may vary, even appreciably, with respect to what has been described herein by way of non-limiting example only, without departing from the extent of protection. The extent of protection is defined by the annexed claims.

## Claims

1. A lighting device, including:
- an annular arrangement of light radiation sources (L) ,
- a light guide (16) of a light propagating material, wherein said light guide (16) extends along a main axis (X16) with a flared tubular shape diverging from an input end (16a) facing said annular arrangement of light radiation sources (L) to collect light radiation therefrom to an output end (16b) for projecting light radiation propagating through the light guide (16), said tubular light guide (16) having an outer surface and an inner surface,
**characterized in that** the device includes:
- a pattern of grooves (220) extending on the outer surface of the light guide (16) lengthwise of the tubular light guide (16), and
- a sequence of annular ribs (240) on the inner surface of the light guide (16), said annular ribs extending cross-wise of said main axis (X16), said annular ribs including a proximal collimating facet (240a) and a distal outcoupling face (240b).

2. The lighting device of claim 1, wherein:
- said annular arrangement of light radiation sources (L) is a circular arrangement of light radiation sources (L), and/or
- said tubular light guide (16) has a frusto-conical shape.

3. The lighting device of claim 1 or claim 2, wherein said grooves (220) on said outer surface extend axially of said tubular light guide (16).

4. The lighting device of any of the previous claims, wherein said annular ribs (240) on the inner surface of the light guide (16) have a triangular cross section with said proximal collimating face (240a) extending lengthwise of said main axis (X16) and said
distal outcoupling face (240b) diverging away from said main axis (X16) preferably with a diverging angle increasing from said input end (16a) to said output end (16b) .

5. The lighting device of any of the previous claims, wherein said output end (16b) of the light guide (16) has a sharp profile, preferably determined by the distal outcoupling face (240b) of the annular rib of said sequence of annular ribs (240) closest to the output end (16b) of the light guide (16).

6. The lighting device of any of the previous claims, wherein said input end (16a) of the light guide (16) has a concave tapered shape, preferably a frusto-conical shape.

7. The lighting device of any of the previous claims, including an inner reflector (20) located within said tubular light guide (16) for re-directing towards said light guide (16) light radiation leaking from said light guide, said inner reflector (20) preferably including a non-flared portion adjacent said input end (16a) of the light guide (16) and a flared diverging portion extending from said non-flared portion towards the output end (16b) of the light guide.

8. The lighting device of any of the previous claims, including an annular reflector collar (18) surrounding said annular arrangement of light radiation sources (L) for directing towards the output end (16b) of said light guide (16) radiation from said light radiation sources.

9. The lighting device of any of the previous claims, including a heat sink (14) coupled in a heat exchange relationship to said annular arrangement of light radiation sources (L) opposite said tubular light guide (16).

10. A method of realizing a lighting device, including:
- providing an annular arrangement of light radiation sources (L),
- coupling with said annular arrangement of light radiation sources (L) a light guide (16) of a light propagating material, wherein said light guide (16) extends along a main axis (X16) with a flared tubular shape diverging from an input end (16a) facing said annular arrangement of light radiation sources (L) to collect light radiation therefrom to an output end (16b) for projecting light radiation propagating through the light guide (16), said tubular light guide (16) having an outer surface and an inner surface,
**characterized in that** the method includes:
- providing on the outer surface of the light guide (16) a pattern of grooves (220) extending lengthwise of the tubular light guide (16), and
- providing on the inner surface of the light guide (16) a sequence of annular ribs (240), said annular ribs extending cross-wise of said main axis (X16), said annular ribs including a proximal collimating facet (240a) and a distal outcoupling face (240b) .

## Patentansprüche

1. Beleuchtungsvorrichtung, beinhaltend:
- eine ringförmige Anordnung von Lichtstrahlungsquellen (L),
- ein Lichtleiter (16) aus einem lichtausbreitenden Material, wobei sich der Lichtleiter (16) entlang einer Hauptachse (X16) mit einer aufgeweiteten Rohrform, die von einem Eingabeende (16a) auseinandergeht und der ringförmigen Anordnung von Lichtstrahlungsquellen (L) gegenübersteht, erstreckt, um Lichtstrahlung davon zu einem Ausgabeende (16b) zu sammeln, zum Projizieren von Lichtstrahlung, die sich durch den Lichtleiter (16) ausbreitet, wobei der rohrförmige Lichtleiter (16) eine äußere Oberfläche und eine innere Oberfläche aufweist, **dadurch gekennzeichnet, dass** die Vorrichtung beinhaltet:
- ein Rillenmuster (220), das sich auf der äußeren Oberfläche des Lichtleiters (16) längs auf dem rohrförmigen Lichtleiter (16) erstreckt, und
- eine Sequenz von ringförmigen Rippen (240) auf der inneren Oberfläche des Lichtleiters (16), wobei sich die ringförmigen Rippen kreuzweise von der Hauptachse (X16) erstrecken, wobei die ringförmigen Rippen eine proximale Kollimatorfacette (240a) und eine distale Auskopplungsfläche (240b) beinhalten.

2. Beleuchtungsvorrichtung nach Anspruch 1, wobei:
- die ringförmige Anordnung von Lichtstrahlungsquellen (L) eine kreisförmige Anordnung von Lichtstrahlungsquellen (L) ist und/oder
- der rohrförmige Lichtleiter (16) eine Kegelstumpfform aufweist.

3. Beleuchtungsvorrichtung nach Anspruch 1 oder Anspruch 2, wobei sich die Rillen (220) auf der äußeren Oberfläche axial zum rohrförmigen Lichtleiter (16) erstrecken.

4. Beleuchtungsvorrichtung nach irgendeinem einem der vorhergehenden Ansprüche, wobei die ringförmigen Rippen (240) auf der inneren Oberfläche des Lichtleiters (16) einen dreieckförmigen Querschnitt aufweisen, mit der proximalen Kollimatorfläche (240a), die sich längs der Hauptachse (X16) erstreckt, und der distalen Auskopplungsfläche (240b), die von der Hauptachse (X16) auseinandergeht, vorzugsweise mit einem auseinandergehenden Winkel, der von dem Eingabeende (16a) zu dem Ausgabeende (16b) zunimmt.

5. Beleuchtungsvorrichtung nach irgendeinem der vorhergehenden Ansprüche, wobei das Ausgabeende (16b) des Lichtleiters (16) ein scharfes Profil aufweist, das vorzugsweise durch die distale Auskopplungsfläche (240b) der ringförmigen Rippe der Sequenz von ringförmigen Rippen (240), die dem Ausgabeende (16b) des Lichtleiters (16) am nächsten ist, bestimmt ist.

6. Beleuchtungsvorrichtung nach irgendeinem der vorhergehenden Ansprüche, wobei das Eingabeende (16a) des Lichtleiters (16) eine konkave konische Form aufweist, vorzugsweise eine Kegelstumpfform.

7. Beleuchtungsvorrichtung nach irgendeinem der vorhergehenden Ansprüche, einschließlich eines inneren Reflektors (20), der in dem rohrförmigen Lichtleiter (16) angeordnet ist, um Lichtstrahlung, die von den Lichtleiter leckt hin zu dem Lichtleiter (16) umzuleiten, wobei der inneren Reflektor (20) vorzugsweise einen nicht aufgeweiteten Abschnitt angrenzend zum Eingabeende (16a) des Lichtleiters (16) und einen aufgeweiteten auseinandergehenden Abschnitt, der sich von dem nicht aufgeweiteten Abschnitt hin zu dem Ausgabeende (16b) des Lichtleiters erstreckt, beinhaltet.

8. Beleuchtungsvorrichtung nach irgendeinem der vorhergehenden Ansprüche, einschließlich eines ringförmigen Reflektorkragens (18), der die ringförmige Anordnung von Lichtstrahlungsquellen (L) umgibt, um Strahlung von den Lichtstrahlungsquellen hin zu dem Ausgabeende (16b) des Lichtleiters (16) zu leiten.

9. Beleuchtungsvorrichtung nach irgendeinem der vorhergehenden Ansprüche, einschließlich einer Wärmesenke (14), die in einem Wärmeaustauschverhältnis mit der ringförmigen Anordnung von Lichtstrahlungsquellen (L) gegenüber dem rohrförmigen Lichtleiter (16) gekoppelt ist.

10. Verfahren zum Realisieren einer Beleuchtungsvorrichtung, beinhaltend:
- Bereitstellen einer ringförmigen Anordnung von Lichtstrahlungsquellen (L),
- Koppeln eines Lichtleiters (16) aus einem lichtausbreitenden Material mit der ringförmigen Anordnung von Lichtstrahlungsquellen (L), wobei sich der Lichtleiter (16) entlang einer Hauptachse (X16) mit einer aufgeweiteten Rohrform erstreckt, die von einem Eingabeende (16a) ausgeht, welche der ringförmigen Anordnung von Lichtstrahlungsquellen (L) gegenübersteht, um davon Lichtstrahlung zu einem Ausgabeende (16b) zu sammeln, zum Projizieren von Lichtstrahlung, die sich durch den Lichtleiter (16) ausbreitet, wobei der rohrförmige Lichtleiter (16) eine äußere Oberfläche und eine innere Oberfläche aufweist,
**dadurch gekennzeichnet, dass** das Verfahren beinhaltet:
- Bereitstellen, auf der äußeren Oberfläche des Lichtleiters (16), eines Rillenmusters (220), das sich längs des rohrförmigen Lichtleiters (16) erstreckt, und
- Bereitstellen, auf der inneren Oberfläche des Lichtleiters (16), einer Sequenz von ringförmigen Rippen (240), wobei sich die ringförmigen Rippen kreuzweise von der Hauptachse (X16) erstrecken, wobei die ringförmigen Rippen eine proximale Kollimatorfacette (240a) und eine distale Auskopplungsfläche (240b) beinhalten.

## Revendications

1. Un dispositif d'éclairage, comprenant :
- un agencement annulaire de sources de rayonnement lumineux (L),
- un guide de lumière (16) en un matériau propageant la lumière, ledit guide de lumière (16) s'étendant le long d'un axe principal (X16) de forme tubulaire évasée divergeant d'une extrémité d'entrée (16a), faisant face audit agencement annulaire de sources de rayonnement lumineux (L) pour recueillir le rayonnement lumineux provenant de celle-ci, à une extrémité de sortie (16b) pour projeter le rayonnement lumineux se propageant au travers du guide de lumière (16), ledit guide de lumière tubulaire (16) présentant une surface extérieure et une surface intérieure,
**caractérisé en ce que** le dispositif comprend :
- un motif de gorges (220) s'étendant sur la surface extérieure du guide de lumière (16) dans le sens de la longueur du guide de lumière tubulaire (16), et
- une série de nervures annulaires (240) sur la surface intérieure du guide de lumière (16), lesdites nervures annulaires s'étendant dans le sens transversal dudit axe principal (X16), lesdites nervures annulaires comprenant une facette de collimation proximale (240a) et une face de couplage de sortie distale (240b).

2. Le dispositif lumineux de la revendication 1, dans lequel :
- ledit agencement annulaire de sources de rayonnement de lumière (L) est un agencement circulaire de sources de rayonnement de lumière (L), et/ou
- ledit guide de lumière tubulaire (16) est de forme tronconique.

3. Le dispositif lumineux de la revendication 1 ou de la revendication 2, dans lequel lesdites gorges (220) sur ladite surface extérieure s'étendent en direction axiale dudit guide de lumière tubulaire (16).

4. Le dispositif lumineux de l'une des revendications précédentes, dans lequel lesdites nervures annulaires (240) sur la surface intérieure du guide de lumière (16) présentent une section droite triangulaire avec ladite face de collimation proximale (240a) s'étendant dans le sens de la longueur dudit axe principal (X16) et ladite face de couplage de sortie distale (240b) divergent en éloignement dudit axe principal (X16) de préférence avec un angle de divergence augmentant de ladite extrémité d'entrée (16a) vers ladite extrémité de sortie (16b).

5. Le dispositif d'éclairage de l'une des revendications précédentes, dans lequel ladite extrémité de sortie (16b) du guide de lumière (16) présente un profil pointu, de préférence déterminé par la face de couplage de sortie distale (240b) de la nervure annulaire de ladite série de nervures annulaires (240) qui est la plus proche de l'extrémité de sortie (16b) du guide de lumière (16).

6. Le dispositif lumineux de l'une des revendications précédentes, dans lequel ladite extrémité d'entrée (16a) du guide de lumière (16) est de forme rétrécie concave, de préférence de forme tronconique.

7. Le dispositif d'éclairage de l'une des revendications précédentes, comprenant un réflecteur interne (20) disposé à l'intérieur dudit guide de lumière tubulaire (16) pour rediriger vers ledit guide de lumière (16) les fuites de rayonnement lumineux provenant dudit guide de lumière, ledit réflecteur interne (20) comprenant de préférence une partie non évasée adjacente à ladite extrémité d'entrée (16a) du guide de lumière (16) et une partie divergente évasée s'étendant à partir de ladite partie non évasée en direction de l'extrémité de sortie (16b) du guide de lumière.

8. Le dispositif d'éclairage de l'une des revendications précédentes, comprenant un collier réflecteur annulaire (18) entourant ledit agencement annulaire de sources de rayonnement lumineux (L) pour diriger vers l'extrémité de sortie (16b) dudit guide lumineux (16) le rayonnement provenant desdites sources de rayonnement lumineux.

9. Le dispositif d'éclairage de l'une des revendications précédentes, comprenant un radiateur thermique (14) couplé en une relation d'échange de chaleur avec ledit agencement annulaire de sources de rayonnement lumineux (L) en vis-à-vis dudit guide de lumière tubulaire (16).

10. Un procédé de réalisation d'un dispositif d'éclairage, comprenant :
- l'obtention d'un agencement annulaire de sources de rayonnement lumineux (L),
- le couplage avec ledit agencement de sources de rayonnement lumineux (L) d'un guide de lumière (16) en un matériau propageant la lumière, ledit guide de lumière (16) s'étendant le long d'un axe principal (X16) de forme tubulaire évasée divergeant d'une extrémité d'entrée (16a), faisant face audit agencement annulaire de sources de rayonnement lumineux (L) pour recueillir le rayonnement lumineux provenant de celle-ci, à une extrémité de sortie (16b) pour projeter le rayonnement lumineux se propageant au travers du guide de lumière (16), ledit guide de lumière tubulaire (16) présentant une surface extérieure et une surface intérieure,
**caractérisé en ce que** le procédé comprend :
- l'obtention sur la surface extérieure du guide de lumière (16) d'un motif de gorges (220) s'étendant dans le sens de la longueur du guide de lumière tubulaire (16), et
- l'obtention sur la surface intérieure du guide de lumière (16) d'une série de nervures annulaires (240) sur la surface intérieure du guide de lumière (16), lesdites nervures annulaires s'étendant dans le sens transversal dudit axe principal (X16), lesdites nervures annulaires comprenant une facette de collimation proximale (240a) et une face de couplage de sortie distale (240b).
